# EUROPEAN PATENT APPLICATION

(11) **EP 4 485 635 A1**
(43) Date of publication of application: **01.01.2025**
(21) Application number: 24177711.9
(22) Date of filing: 23.05.2024
(51) Int. Cl.: H01M 50/107, H01M 50/179, H01M 50/528, H01M 50/533, H01M 50/538, H01M 50/545, H01M 50/55, H01M 50/559

(54) **SECONDARY BATTERY**

(30) Priority: 27.06.2023 KR 20230082635; 01.12.2023 KR 20230172087
(71) Applicant: Samsung SDI Co., Ltd., Yongin-si, Gyeonggi-do 17084 (KR)
(72) Inventor: JUNG, Hyun Ki, 17084 Yongin-si (KR); KIM, Mun Sung, 17084 Yongin-si (KR); KIM, Myung Seob, 17084 Yongin-si (KR); YU, Gwan Hyeon, 17084 Yongin-si (KR); KO, Sung Gwi, 17084 Yongin-si (KR); PARK, Gun Gue, 17084 Yongin-si (KR)
(74) Representative: Marks & Clerk LLP

(57) **Abstract**

A secondary battery (100) includes a case, an electrode assembly (120) in the case, and including first tabs (1211) protruding in a first direction, and second tabs (1221) protruding in the first direction, a first current collector plate (131) electrically connected to the first tabs, a second current collector plate (132) electrically connecting the second tabs to the case, and a rivet terminal (140) electrically connected to the first current collector plate and passing through the case.

## Description

### BACKGROUND

### 1. Field

Embodiments relate to a secondary battery.

### 2. Description of the Related Art

Secondary batteries are rechargeable, unlike primary batteries. In these secondary batteries, a low capacity battery including a battery cell in the form of a pack may be used in portable small electronic devices, such as smartphones and digital cameras, and a high capacity battery module including tens to hundreds of battery packs connected to each other, may be used as a power source for driving motors (e.g., motors of hybrid vehicles, electric vehicles, and/or the like).

A rechargeable secondary battery includes an electrode assembly, in which a separator is interposed between a positive electrode plate and a negative electrode plate, a current collector plate electrically connected to the electrode assembly, a terminal electrically connected to the current collector plate, and a case that accommodates the electrode assembly and the current collector plate and through which the terminal passes to be coupled thereto.

The above-described information serves as the background of the present disclosure, and is only for improving understanding of the background of the present disclosure, and thus may include information that does not constitute the related art.

### SUMMARY

Aspects of some embodiments of the present disclosure provide a secondary battery in which a first tab (e.g., positive electrode tab) and a second tab (e.g., negative electrode tab) of an electrode assembly are provided in the same direction so as to be electrically connected to a first terminal (e.g., rivet terminal) and a second terminal (e.g., case) so that electrical resistance is low, and so that a current path is short.

Other aspects of some embodiments of the present disclosure provide a secondary battery in which a first current collector plate (e.g., positive electrode current collector plate) and a second current collector plate (e.g., negative electrode current collector plate) are three-dimensionally coupled and provided on the same area to occupy a relatively small volume in an internal space of a case, so that a relatively large electrode assembly is accommodated in the case.

Other aspects of some embodiments of the present disclosure provide a secondary battery in which a conductive ring plate is provided on a second terminal (e.g., case) to realize excellent flatness between a first terminal (e.g., rivet terminal) and the second terminal.

According to some embodiments, a secondary battery includes: a case (e.g. a cylindrical case); an electrode assembly in (e.g. accommodated in) the case, and with (e.g. provided with) a plurality of first tabs that protrude in a first direction, and a plurality of second tabs that protrude in the first direction; a first current collector plate in the case and electrically connected to the plurality of first tabs; a second current collector plate configured to electrically connect the plurality of second tabs to the case; and a rivet terminal electrically connected to the first current collector plate and passing through the case.

The plurality of first tabs may have a planar circular sector having a center, an outer arc, and an inner arc, or may have a planar rectangular shape.

A central angle of the first tabs may be less than about 180 degrees.

The second tabs may be spaced apart from the first tabs, and may have a planar circular sector having a center, an outer arc, and an inner arc, or may have a planar rectangular shape.

A central angle of the second tabs may be less than about 180 degrees.

The first current collector plate may include a first current collector plate first connection area electrically connected to the first tabs, a first current collector plate connection area bent and extending from the first current collector plate first connection area, and a first current collector plate second connection area bent and extending from the first current collector plate connection area, and electrically connected to the rivet terminal.

The first current collector plate first connection area may have a planar circular sector having a center, an outer arc, and an inner arc, wherein the first current collector plate second connection area has a disk shape with a center.

The second current collector plate may include a second current collector plate first connection area electrically connected to the second tabs, a second current collector plate connection area bent and extending from the second current collector plate first connection area, and a second current collector plate second connection area bent and extending from the second current collector plate connection area, and electrically connected to the case.

The second current collector plate first connection area may have a planar circular sector having a center, an outer arc, and an inner arc, wherein the second current collector plate second connection area has a circular ring plate shape with a center.

The secondary battery may further include an insulating plate between the first current collector plate and the second current collector plate, and having a partial area in a gap between the second current collector plate and the electrode assembly.

The secondary battery may further include a conductive ring plate coupled to a partial area of the case around the rivet terminal.

The first current collector plate may include a first current collector plate first connection area electrically connected to the first tabs, a first current collector plate connection area bent and extending from the first current collector plate first connection area in the first direction, and a first current collector plate second connection area bent and extending from the first current collector plate connection area, and electrically connected to the rivet terminal, wherein the second current collector plate includes a second current collector plate first connection area electrically connected to the second tabs, a second current collector plate connection area bent and extending from the second current collector plate first connection area in the first direction, and a second current collector plate second connection area bent and extending from the second current collector plate connection area, and electrically connected to the case.

The first current collector plate first connection area and the second current collector plate first connection area may be on a same plane, wherein the first current collector plate second connection area is closer to the electrode assembly than the second current collector plate second connection area.

A partial area of the second current collector plate second connection area may overlap the first current collector plate first connection area.

The case may include a rivet plate coupled to the rivet terminal, a sidewall extending integrally from the rivet plate in a second direction that is opposite to the first direction, and a finish plate configured to block an end of the sidewall.

The finish plate may include a safety vent.

The finish plate may be fixed to the sidewall by a beading part and a crimping part provided on the sidewall.

The finish plate may be fixed to the sidewall by welding.

The case may include a rivet plate coupled to the rivet terminal, a sidewall welded to the rivet plate and extending in a second direction that is opposite to the first direction, and a finish plate extending integrally from the sidewall.

The finish plate may include a safety vent.

At least some of the above and other features of the invention are set out in the claims.

### BRIEF DESCRIPTION OF THE DRAWINGS

The accompanying drawings are included to provide a further understanding of the present disclosure, and are incorporated in and constitute a part of this specification. The drawings illustrate embodiments of the present disclosure and, together with the description, serve to explain aspects of the present disclosure. In the drawings:
FIGS. 1A and 1B respectively illustrate perspective and cross-sectional views of a secondary battery according to embodiments;
FIGS. 2A and 2B respectively illustrate plan and side views of an electrode assembly in the secondary battery according to embodiments;
FIGS. 3A and 3b respectively illustrate cross-sectional and plan views of a current collector plate assembly in the secondary battery according to embodiments;
FIGS. 3C and 3D respectively illustrate plan views of a first current collector plate and a second current collector plate in the current collector plate assembly according to embodiments;
FIG. 4 illustrates a schematic view of a laser welding method in a secondary battery according to embodiments;
FIG. 5 illustrates a cross-sectional view of a secondary battery according to embodiments;
FIG. 6 illustrates a cross-sectional view of the secondary battery according to embodiments; and
FIG. 7 illustrates a cross-sectional view of the secondary battery according to embodiments.

### DETAILED DESCRIPTION

Hereinafter, embodiments will be described in detail with reference to the accompanying drawings.

The present disclosures may, however, be embodied in many different forms and should not be construed as being limited to the embodiments set forth herein; rather, these embodiments are provided so that those skilled in the art thoroughly understand the present disclosure. Rather, these embodiments are provided so that this disclosure will be thorough and complete, and will fully convey the scope of the present disclosure to those skilled in the art.

In addition, in the following drawings, the thickness or size of each layer is exaggerated for convenience and clarity of description, and the same reference numerals in the drawings refer to the same elements. As used herein, the term "and/or" includes any and all combinations of one or more of the associated listed items. In this specification, it will also be understood that if a member A is referred to as being connected to a member B, the member A can be directly connected to the member B or indirectly connected to the member B with a member B therebetween.

The terms used in this specification are for illustrative purposes of the present disclosure only and should not be construed to limit the meaning or the scope of the present disclosure. As used in this specification, a singular form may, unless definitely indicating a particular case in terms of the context, include a plural form. Also, the expressions "comprise/include" and/or "comprising/including" used in this specification neither define the mentioned shapes, numbers, steps, operations, members, elements, and/or groups of these, nor exclude the presence or addition of one or more other different shapes, numbers, steps, operations, members, elements, and/or groups of these, or addition of these. The term "and/or" used herein includes any and all combinations of one or more of the associated listed items.

As used herein, terms such as "first," "second," etc. are used to describe various members, components, areas, layers, and/or portions. However, it is obvious that the members, components, areas, layers, and/or portions should not be defined by these terms. The terms do not mean a particular order, up and down, or superiority, and are used only for distinguishing one member, component, region, layer, or portion from another member, component, region, layer, or portion. Thus, a first member, component, region, layer, or portion which will be described may also refer to a second member, component, region, layer, or portion, without departing from the teaching of the present disclosure.

Spatially relative terms, such as "bottom", "beneath", "below", "lower", "above", "upper" and the like, may be used herein for ease of description to describe one element or feature's relationship to another element(s) or feature(s) as illustrated in the drawings. These spatially relative terms are intended for easy comprehension of the prevent invention according to various process states or usage states of the prevent invention, and thus, the present disclosure is not limited thereto. For example, an element or feature shown in the drawings is turned inside out, the element or feature described as "bottom", "beneath", or "below" may change into "above" or "upper". Thus, the terms "bottom" and "beneath" may encompass the term "above" or "below".

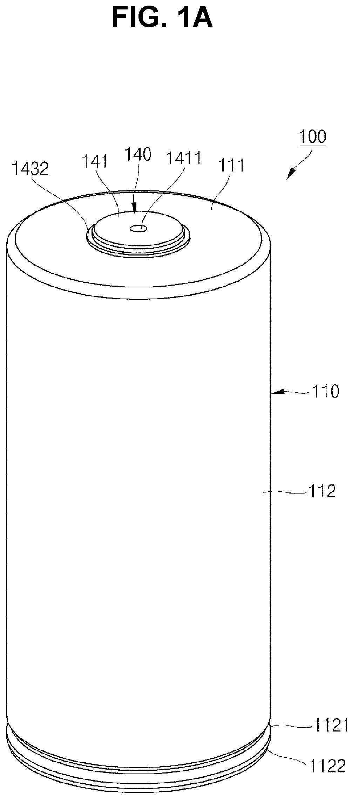

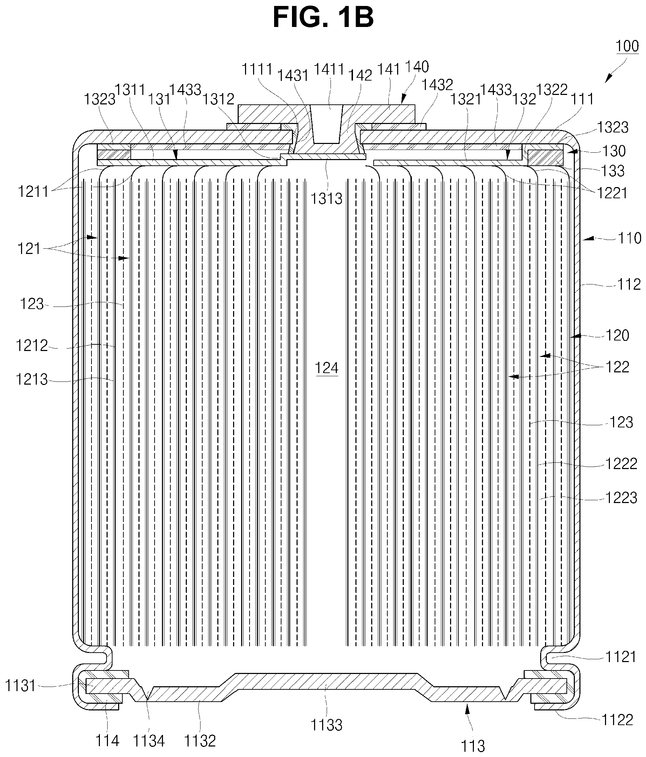

FIGS. 1A and 1B respectively illustrate perspective and cross-sectional views of a secondary battery 100 according to embodiments. As illustrated in FIGS. 1A and 1B, the secondary battery 100 according to embodiments may include a case 110, an electrode assembly 120, a current collector plate assembly 130, and a terminal (e.g., rivet terminal 140).

The case 110 may be provided in a substantially cylindrical shape. The case 110 may include a rivet plate 111 having a substantially disk shape with a terminal hole 1111 at a center thereof, a sidewall 112 extending downwardly from the rivet plate 111, and a finish plate 113 that blocks a lower end of the sidewall 112. The case 110 may include, or may be referred to as, a can, a housing, or an exterior. The case 110 may include steel, a steel alloy, nickel-plated steel, aluminum, an aluminum alloy, copper, or a copper alloy. The case 110 may be manufactured through a deep drawing process in which a metal plate is placed on a die having an opening, and is pressed by a punch to manufacture a cylindrical case, an extrusion process in which molten metal is put into an extrusion die and extruded into a pipe-shape case, or a bending and welding process in which a thin metal plate is rolled to be bent and welded so as to manufacture a case. The case 110 may accommodate the electrode assembly 120, the current collector plate assembly 130, and an electrolyte, which may be optional, to isolate the components from external environments.

In some embodiments, the rivet plate 111 and the sidewall 112 may be provided in one body. In some embodiments, the rivet plate 111 and the sidewall 112 may be provided separately and then coupled and welded to each other. In some embodiments, the sidewall 112 and the finish plate 113 may be provided in one body. In some embodiments, the sidewall 112 and the finish plate 113 may be provided separately and then welded and coupled to each other (e.g., a beadless design).

In some embodiments, an inwardly recessed beading part 1121 and an inwardly bent crimping part 1122 may be optionally provided in a lower end of the sidewall 112. In some embodiments, the finish plate 113 may be coupled between the beading part 1121 and the crimping part 1122. In some embodiments, an insulating gasket 114 may be disposed (e.g. located) on the beading part 1121 and the crimping part 1122, and the finish plate 113 may be coupled in the state in which the insulating gasket 114 is interposed between the beading part 1121 and the crimping part 1122. As described above, instead of providing the beading part 1121 and the crimping part 1122, the finish plate 113 may be directly welded and coupled to the sidewall 112, or the finish plate 113 may be coupled to the sidewall 112 in a curling or seaming manner.

In some embodiments, the finish plate 113 may include a relatively thin vent notch 1134 in an upper surface thereof. In some embodiments, the finish plate 113 may include a peripheral area 1131 that is sandwiched between the beading part 1121 and the crimping part 1122, an inner area 1132 connected to the peripheral area 1131 and lower than the peripheral area 1131, and a central area 1133 connected to the inner area 1132 and higher than the inner area 1132. The vent notch 1134 may be provided in the inner area 1132. In some embodiments, the central area 1133 may be closer to the electrode assembly 120 than the peripheral area 1131 and the inner area 1132. The vent notch 1134 may include, or may be referred to as, a safety vent. This vent notch 1134 may be broken if an internal pressure of the secondary battery is higher than a reference pressure to release an internal gas.

The electrode assembly 120 may be provided in a substantially cylindrical shape. The electrode assembly 120 may be wound into a cylindrical shape and then coupled to the case 110. The electrode assembly 120 may include, or may be referred to as, an electrode group or a jelly roll. The electrode assembly 120 may include a first electrode plate 121 (e.g., a positive electrode plate), a second electrode plate 122 (e.g., a negative electrode plate), and a separator 123. In some embodiments, the first electrode plate 121 (e.g., the positive electrode plate), the separator 123, and the second electrode plate 122 (e.g., the negative electrode plate) may be stacked and wound into a substantially cylindrical shape. The first electrode plate 121 may include a plurality of first tabs 1211 extending upwardly. The second electrode plate 122 may include a plurality of second tabs 1221 extending upwardly. Here, the upward direction may be defined as a first direction, and the downward direction, which is opposite to the upward direction, may be defined as a second direction.

In some embodiments, the first electrode plate 121 may be provided by applying a first active material 1213, such as transition metal oxide, to a first current collector 1212 made of metal foil, such as aluminum, and may include a first tab 1211 (e.g., an area that is not coated with the first active material 1213) extending and protruding toward an upper side of the first current collector 1212. The first tab 1211 extending and protruding as described above may be referred to as a first non-coating portion tab or a first base material tab, and the first tab 1211 may be aligned at the same or similar position through a winding process, a base material punching process, or a base material notching process to constitute a multi-tab. In some embodiments, the first tab 1211 may include a lead tab that is separately provided and welded to the first current collector 1212.

In some embodiments, a compound capable of reversible intercalation and deintercalation of lithium (lithiated intercalation compound) may be used as the first active material. In some embodiments, one or more types of complex oxides of lithium and a metal selected from cobalt, manganese, nickel, iron, or combinations thereof may be used.

The complex oxides may be lithium transition metal complex oxide, and examples may include lithium nickel-based oxide, lithium cobalt-based oxide, lithium manganese-based oxide, lithium iron phosphate-based compound, cobalt-free nickel-manganese-based oxide, or a combination thereof.

For example, a compound represented by any one of the following chemical formulas may be used: LiaA1-bXbO2-cDc(0.90≤a≤1.8, 0≤b≤0.5, 0≤c≤0.05); LiaMn2-bXbO4-cDc(0.90≤a≤1.8, 0≤b≤0.5, 0≤c≤0.05); LiaNi1-b-cCobXcO2-αDα(0.90≤a≤1.8, 0≤b≤0.5, 0≤c≤0.5, 0<α<2); LiaNi1-b-cMnbXcO2-αDα(0.90≤a≤1.8, 0≤b≤0.5, 0≤c≤0.5, 0<α<2); LiaNibCocL1dGeO2(0.90≤a≤1.8, 0≤b≤0.9, 0≤c≤0.5, 0≤d≤0.5, 0≤e≤0.1); LiaNiGbO2(0.90≤a≤1.8, 0.001≤b≤0.1); LiaCoGbO2(0.90≤a≤1.8, 0.001≤b≤0.1); LiaMn1-bGbO2(0.90≤a≤1.8, 0.001≤b≤0.1); LiaMn2GbO4(0.90≤a≤1.8, 0.001≤b≤0.1); LiaMn1-gGgPO4(0.90≤a≤1.8, 0≤g≤0.5); Li(3-f)Fe2(PO4)3(0≤f≤2); LiaFePO4(0.90≤a≤1.8).

In the above-described chemical formulas: A may be Ni, Co, Mn, or a combination thereof; X may be Al, Ni, Co, Mn, Cr, Fe, Mg, Sr, V, a rare earth element, or a combination thereof; D may be O, F, S, P, or a combination thereof; G may be Al, Cr, Mn, Fe, Mg, La, Ce, Sr, V, or a combination thereof; and L1 may be Mn, Al, or a combination thereof.

In some embodiments, a positive electrode for a lithium secondary battery may include a current collector (e.g., a first current collector) and a positive electrode active material layer (e.g., a first active material layer) disposed (e.g. located) on the current collector. The positive electrode active material layer may include a positive electrode active material, and may further include a binder and/or a conductive material.

A content of the positive electrode active material may be about 90% to about 99.5% by weight based on 100% by weight of the positive electrode active material layer, and a content of each of the binder and the conductive material may be about 0.5% to 5% or about 5% by weight based on 100% by weight of the positive electrode active material layer.

The first tab 1211 may be electrically connected to the first current collector plate 131 and to the terminal (e.g., the rivet terminal 140) to provide a path for a current flow between the first electrode plate 121 and the rivet terminal 140.

In some embodiments, the second electrode plate 122 may be provided by applying a second active material 1223, such as graphite or carbon, to a second current collector 1222 made of metal foil, such as copper or nickel, and may include a second tab 1221 (e.g., an area that is not coated with the second active material 1223) that extends and protrudes toward an upper side of the second current collector 1222. The second tab 1221 extending and protruding as described above may be referred to as a second non-coating portion tab or a second base material tab, and the second tab 1221 may be aligned at the same or similar position through a winding process, a base material punching process, or a base material notching process to constitute a multi-tab. In some embodiments, the second tab 1221 may include a lead tab that is separately provided and welded to the second current collector 1222. The second tab 1221 may be electrically connected to the second terminal (e.g., the case 110) to provide a path for current flow between the second electrode plate 122 and the case 110.

In some embodiments, the second active material may include a material capable of reversibly intercalating/deintercalating lithium ions, a lithium metal, an alloy of the lithium metal, a material capable of doping and dedoping lithium, or transition metal oxide.

The material capable of reversibly intercalating/deintercalating lithium ions may be a carbon-based negative electrode active material, and may include, for example, crystalline carbon, amorphous carbon, or a combination thereof. Examples of the crystalline carbon may include graphite, such as natural graphite or artificial graphite, and examples of the amorphous carbon may include soft carbon, hard carbon, mesophase pitch carbide, calcined coke, etc.

A Si-based negative electrode active material or an Sn-based negative electrode active material may be used as the material capable of doping and dedoping lithium. The Si-based negative electrode active material may be silicon, silicon-carbon composite, SiOx (0 < x < 2), an Si-based alloy, or a combination thereof.

The silicon-carbon composite may be a composite of silicon and amorphous carbon. According to some embodiments, the silicon-carbon composite may be in the form of silicon particles and amorphous carbon coated on a surface of each silicon particle.

The silicon-carbon composite may further include crystalline carbon. For example, the silicon-carbon composite may include a core containing crystalline carbon and silicon particles, and an amorphous carbon coating layer disposed (e.g. located) on a surface of the core.

A negative electrode for the lithium secondary battery may include a current collector (e.g., a second current collector) and a negative electrode active material layer (e.g., a second active material layer) disposed (e.g. located) on the current collector. The negative electrode active material layer includes a negative electrode active material, and may further include a binder and/or a conductive material.

For example, the negative electrode active material layer may include about 90% to about 99% by weight of the negative electrode active material, about 0.5% to about 5% by weight of the binder, and about 0% to about 5% by weight of the conductive material. The binder may be a non-aqueous binder, an aqueous binder, a dry binder, or a combination thereof. If the aqueous binder is used as the negative electrode binder, the negative electrode binder may further include a cellulose-based compound capable of imparting viscosity.

The separator 123 may be interposed between the first electrode plate 121 and the second electrode plate 122 to reduce or prevent the likelihood of a short circuit between the first electrode plate 121 and the second electrode plate 122, and to enable movement of lithium ions. The separator 123 may be slightly wider than the surface area of each of the first electrode plate 121 and the second electrode plate 122 to further protrude in upward, downward, left, and/or right directions than each of the first electrode plate 121 and the second electrode plate 122. In some embodiments, the separator 123 may reduce or prevent the likelihood of the first electrode plate 121 and the second electrode plate 122 being in direct contact with the case 110 in the upward, downward, left, and/or right directions of the electrode assembly 120. In some embodiments, the separator 123 may protrude and extend by a corresponding length in the upward and/or downward directions of the electrode assembly 120 without the first tab 1211 and the second tab 1221.

In some embodiments, the electrode assembly 120 may be approximately hollow in the central area, which may also be referred to as the core 124. The core 124 may serve as a passage through which a pressure is discharged if an internal pressure of the secondary battery becomes greater than a reference pressure. In some embodiments, the internal pressure may be applied to the finish plate 113 through the core 124 to break the vent notch 1134 of the finish plate 113, thereby reducing the internal pressure.

In some embodiments, the electrode assembly 120 may be accommodated in the case 110 together with the electrolyte. In some embodiments, the electrolyte may include an organic solvent, such as ethylene carbonate (EC), propylene carbonate (PC), diethyl carbonate (DEC), ethylmethyl carbonate (EMC), and/or dimethyl carbonate (DMC), and lithium salt, such as LiPF6 or LiBF4. In some embodiments, the electrolyte may be liquid, solid, or gel.

The current collector plate assembly 130 may include a first current collector plate 131 and a second current collector plate 132. The current collector plate assembly 130 may further include an insulating plate 133.

The first current collector plate 131 may electrically connect the first electrode plate 121 of the electrode assembly 120 to the rivet terminal 140. The first current collector plate 131 may include, or may be referred to as, a current collector, a conductor, or a conductive lead. The first current collector plate 131 may be made of aluminum or an aluminum alloy. The first current collector plate 131 may be manufactured by punching a metal plate using a die and a punch, or by casting a molten metal. In some embodiments, the first current collector plate 131 may include a first current collector plate first connection area 1311, a first current collector plate connection area 1312, and a first current collector plate second connection area 1313. The first current collector plate first connection area 1311 may be electrically connected to the plurality of first tabs 1211 described above through a method such as laser welding. The first current collector plate connection area 1312 may be bent and may extend upwardly from the first current collector plate first connection area 1311. The first current collector plate second connection area 1313 may be bent and may extend from the first current collector plate connection area 1312, and may be electrically connected to the rivet terminal 140 through a method such as laser welding. In some embodiments, the first current collector plate 131 may become a current flow path between the electrode assembly 120 and the rivet terminal 140.

The second current collector plate 132 may electrically connect the second electrode plate 122 of the electrode assembly 120 to the case 110 (for example, the rivet plate 111). The second current collector plate 132 may include, or may be referred to as, a current collector, a conductor, or a conductive lead. The second current collector plate 132 may be made of copper, a copper alloy, nickel, or a nickel alloy. The second current collector plate 132 may be manufactured by punching a metal plate using a die and a punch, or by casting a molten metal. In some embodiments, the second current collector plate 132 may include a second current collector plate first connection area 1321, a second current collector plate connection area 1322, and a second current collector plate second connection area 1323. The second current collector plate first connection area 1321 may be electrically connected to the plurality of second tabs 1221 described above through a method, such as laser welding. The second current collector plate connection area 1322 may be bent, and may extend upwardly from the second current collector plate first connection area 1321. The second current collector plate second connection area 1323 may be bent, and may extend from the second current collector plate connection area 1322 and may be electrically connected to the case 110 (e.g., to the rivet plate 111) through a method, such as laser welding. In some embodiments, the second current collector plate 132 may become a current flow path between the electrode assembly 120 and the case 110.

The insulating plate 133 may be interposed between the first and second current collector plates 131 and 132. In some embodiments, a portion of the insulating plate 133 may be interposed between the first current collector plate first connection area 1311 and the second current collector plate second connection area 1323 to reduce or prevent the likelihood of the first current collector plate 131 and the second current collector plate 132 being electrically short-circuited with each other. In some embodiments, a portion of the insulating plate 133 may be interposed between the second current collector plate second connection area 1323 and the electrode assembly 120. The insulating plate 133 may include, or may be referred to as, an insulator, an insulating block, or an insulating facer. The insulating plate 133 may be made of polypropylene, polyethylene, double synthetic rubber (EPDM), or nylon that does not react with the electrolyte. In some embodiments, the first current collector plate 131, the second current collector plate 132, and the insulating plate 133 may be manufactured through a double injection method.

The rivet terminal 140 may pass through the case 110. In some embodiments, the rivet terminal 140 may pass through a terminal hole 1111 provided in the rivet plate 111. In some embodiments, an insulating gasket 1431 may be interposed between the rivet terminal 140 and the terminal hole 1111. In some embodiments, the rivet terminal 140 may include a relatively wide head part 141 and a relatively narrow body part 142 extending downwardly from the head part 141 to pass through the terminal hole 1111. In some embodiments, the rivet terminal 140 may further include a recess 1411 receding at a corresponding depth from an upper surface of the head part 141 toward the body part 142. A thickness between a bottom surface of the body part 142 and a corresponding lowest surface may become relatively thin due to the recess 1411, and energy of a laser beam may be smoothly transmitted to the first current collector plate 131 (e.g., the first current collector plate second connection area 1313) so that the rivet terminal 140 and the first current collector plate 131 are welded to each other through laser welding. In some embodiments, an upper insulator 1432 may be further interposed between the head part 141 and the rivet plate 111. In some embodiments, a lower insulator 1433 may be further interposed around the body part 142 passing through the rivet plate 111. In some embodiments, the lower insulator 1433 may be interposed between the current collector plate assembly 130 and rivet plate 111. In some embodiments, the recess 1411 may be finished with a generally flat member (e.g., metal) after the welding process. In some embodiments, after the welding process, a metal member may be coupled to the recess 1411, or may close an upper end of the recess 1411.

In some embodiments, the present disclosure may provide the secondary battery 100 in which the first tab 1211 (e.g., the positive electrode tab) and the second tab 1221 (e.g., the negative electrode tab) of the electrode assembly 120 are provided in the same direction (e.g., the upward direction) so as to be electrically connected to the first terminal (e.g., the rivet terminal 140) and the second terminal (e.g., the case 110) so that the electrical resistance is low, and so that the current path is short. In some embodiments, the present disclosure may provide the secondary battery 100 in which the first current collector plate 131 (e.g., the positive electrode current collector plate) and the second current collector plate 132 (e.g., the negative electrode current collector plate) are three-dimensionally coupled and provided on the same area to occupy a relatively small volume in the internal space of the case 110 so that the relatively large electrode assembly 120 is accommodated in the case 110.

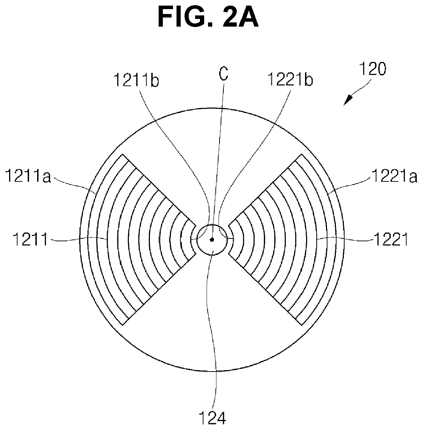

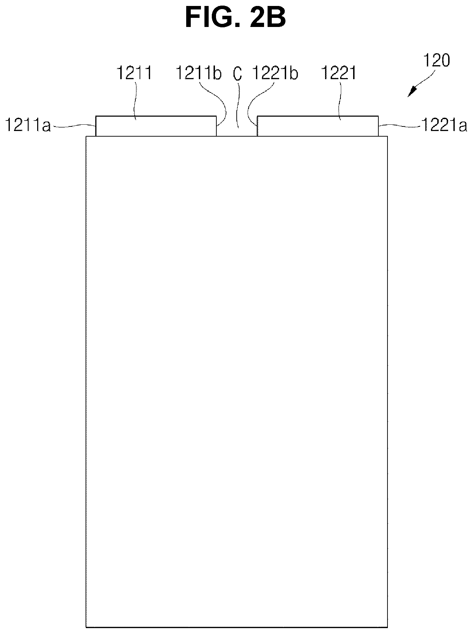

FIGS. 2A and 2B respectively illustrate plan and side views of the electrode assembly 120 in the secondary battery 100 according to embodiments. As illustrated in FIGS. 2A and 2B, the electrode assembly 120 according to embodiments may include a plurality of first tabs 1211 and a plurality of second tabs 1221, which protrude and extend upwardly. In some embodiments, the plurality of first tabs 1211 and the plurality of second tabs 1221 may be provided in shapes that are symmetrical to each other about the central core 124 (e.g., an empty space).

In some embodiments, the plurality of first tabs 1211 may have a planar circular sector shape or planar fan shape with a center C, an outer arc 1211a, and an inner arc 1211b. A length of the outer arc 1211a may be longer than that of the inner arc 1211b. In some embodiments, a central angle of the number of first tabs 1211 may be in a range of about 10 degrees to about 180 degrees, in a range of about 40 degrees to about 160 degrees, or in a range of about 80 degrees to about 120 degrees. If the central angle of the plurality of first tabs 1211 is greater than about 180 degrees, the first tabs 1211 may be in contact with the second tabs 1221, and if the central angle of the plurality of first tabs 1211 is less than about 10 degrees, a contact area or welding area with the first current collector plate 131 may be relatively small. In some embodiments, the plurality of first tabs 1211 may have a substantially rectangular planar shape. In some embodiments, the plurality of first tabs 1211 may have a rectangular shape with a center C, an outer arc 1211a, and an inner arc 1211b.

In some embodiments, the plurality of second tabs 1221 may be provided at opposing positions that are spaced apart from the plurality of first tabs 1211, and the plane may have a circular sector or a fan shape with a center C, an outer arc 1221a, and an inner arc 1221b. A length of the outer arc 1221a may be longer than that of the inner arc 1221b. In some embodiments, a central angle of the number of second tabs 1221 may be in a range of about 10 degrees to about 180 degrees, in a range of about 40 degrees to about 160 degrees, or in a range of about 80 degrees to about 120 degrees. If the central angle of the plurality of second tabs 1221 is greater than about 180 degrees, the second tabs 1221 may be in contact with the first tabs 1211, and if the central angle of the plurality of second tabs 1221 is less than about 10 degrees, a contact area or welding area with the second current collector plate 132 may be relatively small. In some embodiments, the plurality of second tabs 1221 may have a substantially rectangular planar shape. In some embodiments, the plurality of second tabs 1221 may have a rectangular shape with a center C, an outer arc 1221a, and an inner arc 1221b.

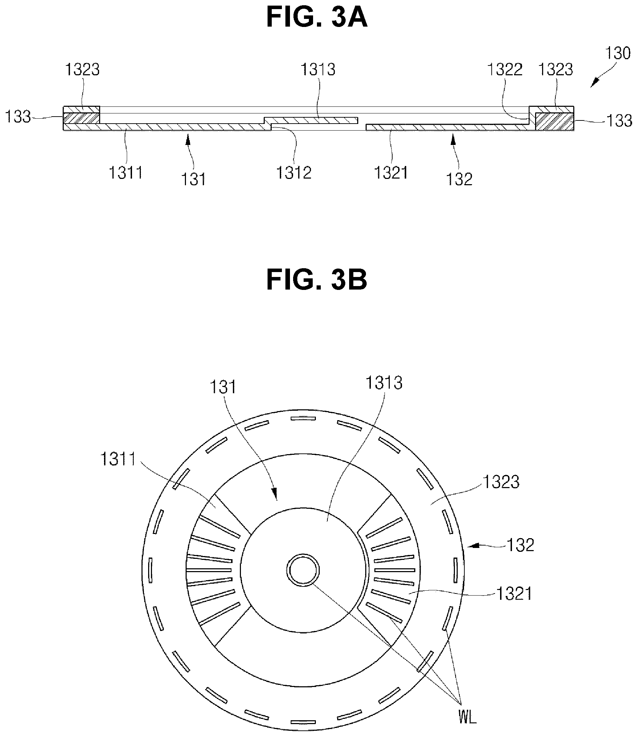

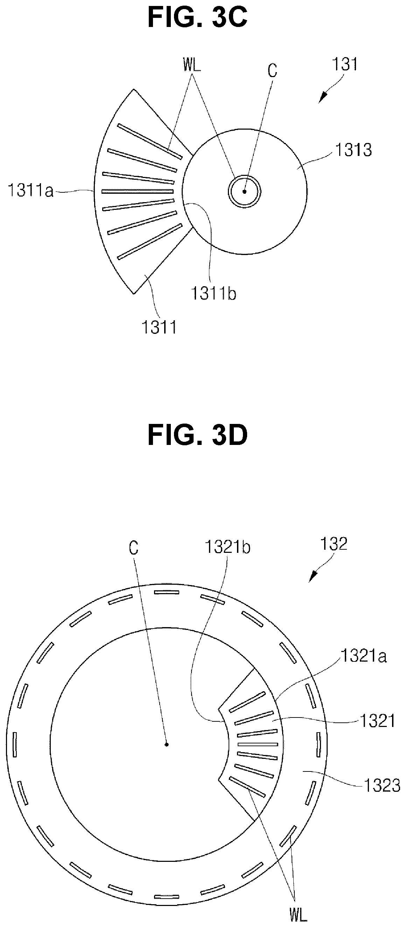

FIGS. 3A and 3b respectively illustrate cross-sectional and plan views of the current collector plate assembly 130 in the secondary battery 100 according to embodiments, and FIGS. 3C and 3D respectively illustrate plan views of the first current collector plate 131 and the second current collector plate 132 in the current collector plate assembly 130 according to embodiments.

As described above, the current collector plate assembly 130 may include a first current collector plate 131, a second current collector plate 132, and an insulating plate 133 (optional). In some embodiments, as described above, the first current collector plate 131 may include a first current collector plate first connection area 1311, a first current collector plate connection area 1312, and a first current collector plate second connection area 1313.

In some embodiments, the first current collector plate first connection area 1311 may be a planar circular sector shape or a planar fan shape with a center C, an outer arc 1311a, and an inner arc 1311b. A length of the outer arc 1311a may be longer than that of the inner arc 1311b. In some embodiments, the first current collector plate second connection area 1313 may have a disk shape with a center. In some embodiments, a plurality of welding lines WL may be provided in a straight line on the first current collector plate first connection area 1311, and the first tab 1211 and the first current collector plate first connection area 1311 may be electrically connected to each other by the welding lines WL. In some embodiments, the first tab 1211 may be compacted or bent in an inward or outward direction, and may be welded to the first current collector plate first connection area 1311. In some embodiments, the plurality of welding lines WL may be provided in a ring shape on the first current collector plate second connection area 1313, and the rivet terminal 140 and the first current collector plate second connection area 1313 may be electrically connected to each other by the welding lines WL. In some embodiments, the planar shape of the first current collector plate first connection area 1311 may be the same as or similar to that of the first tab 1211. In some embodiments, the first current collector plate first connection area 1311 may overlap the first tab 1211.

As described above, the second current collector plate 132 may include a second current collector plate first connection area 1321, a second current collector plate connection area 1322, and a second current collector plate second connection area 1323.

In some embodiments, the second current collector plate first connection area 1321 may be a planar circular sector shape or planar fan shape with a center C, an outer arc 1321a, and an inner arc 1321b. In some embodiments, the second current collector plate first connection area 1321 may be symmetrical to the first current collector plate first connection area 1311 with respect to the core 124 of the electrode assembly 120 or with respect to the first current collector plate second connection area 1313. In some embodiments, the second current collector plate second connection area 1323 may be in the form of a circular ring plate having a center. In some embodiments, the center C of the second current collector plate second connection area 1323 may coincide with the center C of the core of the electrode assembly 120 or with the center C of the first current collector plate second connection area 1313. In some embodiments, a partial area of the second current collector plate second connection area 1323 may overlap a partial area of the first current collector plate first connection area 1311 in a vertical direction. A partial area of the insulating plate 133 may be interposed between the overlapping areas, such as between the partial area of the first current collector plate first connection area 1311 and the partial area of the second current collector plate second connection area 1323. As described above, a partial area of the insulating plate 133 may also be provided between the second current collector plate second connection area 1323 and the electrode assembly 120. In some embodiments, a plurality of welding lines WL may be provided in a straight line on the second current collector plate first connection area 1321, and the second tab 1221 and the second current collector plate first connection area 1321 may be electrically connected to each other by the welding lines WL. In some embodiments, the second tab 1221 may be compacted or bent in an inward or outward direction, and may be welded to the second current collector plate first connection area 1321. In some embodiments, the plurality of welding lines WL may be provided in the form of a circular dotted line in the second current collector plate second connection area 1323, and the case 110 (e.g., the rivet plate 111) and the second current collector plate second connection area 1323 may be electrically connected to each other by the welding lines WL. In some embodiments, the planar shape of the second current collector plate first connection area 1321 may be the same as or similar to that of the second tab 1211. In some embodiments, the second current collector plate first connection area 1321 may overlap the second tab 1211.

In some embodiments, the first current collector plate first connection area 1311 and the second current collector plate first connection area 1321 may be disposed (e.g. located) on the same or similar plane, and the first current collector plate second connection area 1313 may be closer (e.g. disposed closer) to the electrode assembly 120 than the second current collector plate second connection area 1323. In some embodiments, the current collector plate assembly 130 may be provided to have a relatively compact thickness to occupy a relatively small volume inside the secondary battery 100. In some embodiments, a relatively large electrode assembly 120 may be provided inside the secondary battery 100.

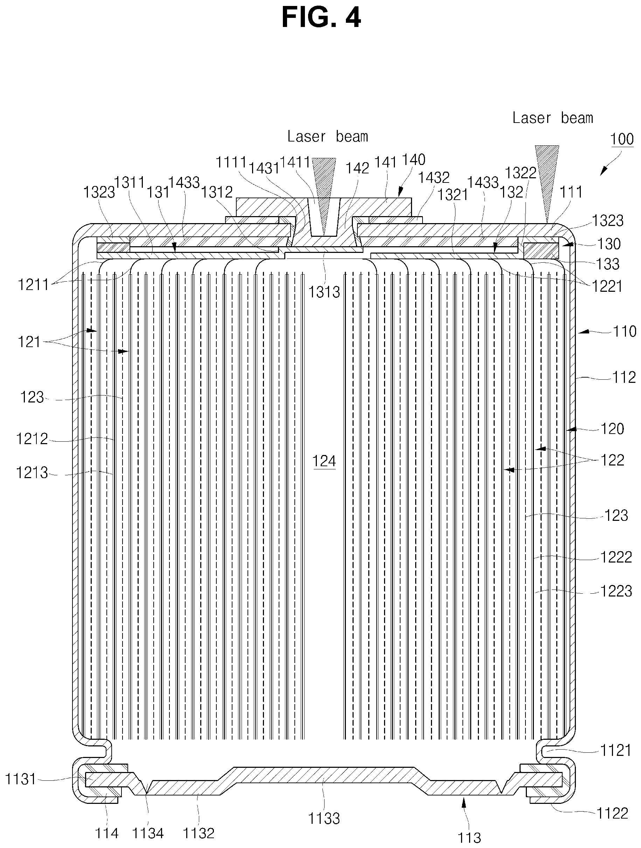

FIG. 4 illustrates a schematic view of a laser welding method in a secondary battery 100 according to embodiments. As illustrated in FIG. 4, laser beam may be provided to a recess 1411 of a rivet terminal 140 so that a body part 142 of the rivet terminal 140 is electrically connected to a first current collector plate first connection area 1311. In some embodiments, as illustrated in FIG. 4, the laser beam may be provided in the form of an approximately circular dotted line along a circumference of the case 110 (e.g., the rivet plate 111) so that the rivet plate 111 is electrically connected to a second current collector plate second connection area 1323.

In some embodiments, a first current path may be provided through the first terminal (e.g., the rivet terminal 140), a first current collector plate 131, and a first electrode plate 121. A second current path may be provided through a second terminal (e.g., the case 110 or the rivet plate 111), a second current collector plate 132, and a second electrode plate 122. In some embodiments, the first current path and the second current path, which are relatively short, may be provided to reduce internal electrical resistance of the secondary battery 100.

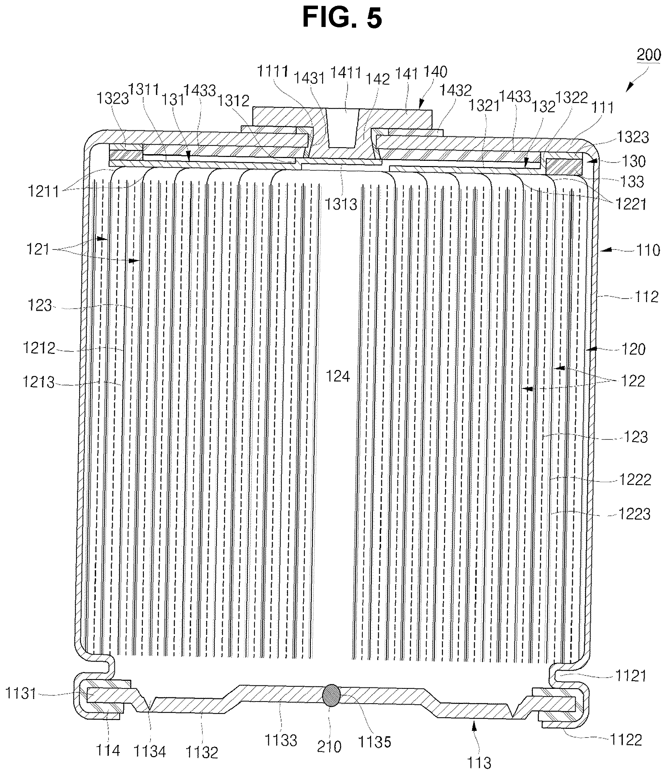

FIG. 5 illustrates a cross-sectional view of a secondary battery according to embodiments. A secondary battery 200 illustrated in FIG. 5 may be similar to the secondary battery 100 illustrated in FIGS. 1A and 1B, except that a liquid injection port 1134 and a plug 210 are provided in a finish plate 113. As illustrated in FIG. 5, the liquid injection port 1134 may be provided in the finish plate 113, for example, in a central area 1133, and the liquid injection port 1134 may be closed due to the plug 210. In some embodiments, an electrolyte may be injected through the liquid injection port 1134, and the liquid injection port 1134 may be blocked by the plug 210 to reduce or prevent the likelihood of the electrolyte leaking. In some embodiments, the liquid injection port and the plug may be provided on the rivet plate 111.

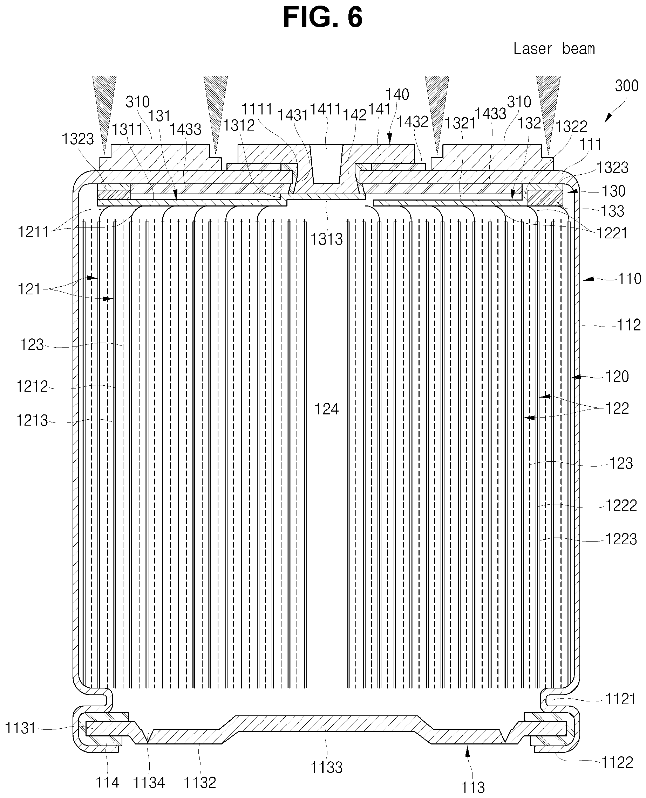

FIG. 6 illustrates a cross-sectional view of the secondary battery 300 according to embodiments. A secondary battery 300 illustrated in FIG. 6 may be similar to the secondary battery 100 illustrated in FIGS. 1A and 1B, except that a conductive ring plate 310 is further provided. As illustrated in FIG. 6, the conductive ring plate 310 may be mechanically/electrically attached to a partial area of a case 110 surrounding a rivet terminal 140 (e.g., to a rivet plate 111). In some embodiments, the conductive ring plate 310 may be welded to the rivet plate 111 by laser beam. The conductive ring plate 310 may be made of a material similar to or the same as the rivet plate 111. In some embodiments, a top surface of the conductive ring plate 310 may be similar to or may form the same plane as a top surface of the rivet terminal 140. In some embodiments, busbars connected to the rivet terminal 140 and the conductive ring plate 310 may have the same height. In some embodiments, the top surface of the conductive ring plate 310 may be lower than the top surface of the rivet terminal 140. In some embodiments, the busbars connected to the rivet terminal 140 and the conductive ring plate 310 may have different heights.

In some embodiments, the present disclosure may provide the conductive ring plate 310 on a second terminal (e.g., the rivet plate 111 of the case 110) to provide the secondary battery 300 having excellent flatness between the first terminal (e.g., the rivet terminal 140) and the second terminal (e.g. case 110).

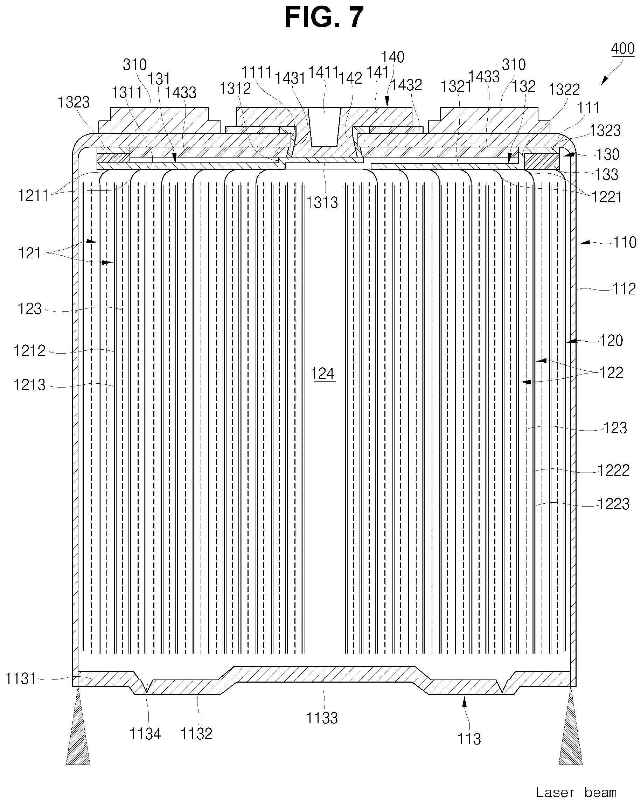

FIG. 7 illustrates a cross-sectional view of the secondary battery according to embodiments. A secondary battery 400 illustrated in FIG. 7 may be similar to the secondary battery 100 illustrated in FIGS. 1A and 1B, except that a finish plate 113 is welded and fixed to a sidewall 112 of a case 110. As illustrated in FIG. 7, the finish plate 113 may be fixed to the sidewall 112 of the case 110 by laser welding. In some embodiments, after the finish plate 113 is coupled to the sidewall 112 of the case 110, the laser beam may be irradiated onto a portion at which a circumference of the finish plate 113 and the sidewall 112 are in contact with each other. In some embodiments, the circumference of the finish plate 113 and a partial area of the sidewall 112 may be melted and cooled, so that the finish plate 113 is eventually coupled to the sidewall 112 of the case 110. In some embodiments, a beadless secondary battery 400 may be provided to remove a space that is occupied by a beading part and a crimping part. In some embodiments, the present disclosure may accommodate the relatively larger electrode assembly 120 in the case 110 to provide the secondary battery 400 having relatively high capacity.

Aspects of some embodiments of the present disclosure provide a secondary battery in which a first tab (e.g., positive electrode tab) and a second tab (e.g., negative electrode tab) of an electrode assembly are provided in the same direction so as to be electrically connected to a first terminal (e.g., rivet terminal) and a second terminal (e.g., the case 110) so that the electrical resistance is low, and the current path is short.

The present disclosure may provide the secondary battery in which the first current collector plate (e.g., positive electrode current collector plate) and the second current collector plate (e.g., negative electrode current collector plate) are three-dimensionally coupled and provided at the same general area to occupy the relatively small volume in the internal space of the case so that the relatively large electrode assembly is accommodated in the case.

The present disclosure may provide the secondary battery in which the conductive ring plate is provided on the second terminal (e.g., the case 110) to realize the excellent flatness between the first terminal (e.g., rivet terminal) and the second terminal.

Embodiments are set out in the following clauses:
Clause 1. A secondary battery comprising: a cylindrical case; an electrode assembly accommodated in the case and provided with a plurality of first tabs that protrude in a first direction and a plurality of second tabs that protrude in the first direction; a first current collector plate accommodated in the case and connected to the plurality of first tabs; a second current collector plate configured to connect the plurality of second tabs to the case; and a rivet terminal connected to the first current collector plate to pass through the case.
Clause 2. The secondary battery of Clause 1, wherein the plurality of first tabs are provided in a planar circular sector which has a center, an outer arc, and an inner arc, or a planar rectangular shape.
Clause 3. The secondary battery of Clause 2, wherein a central angle of the plurality of first tabs is less than an angle of about 180 degrees.
Clause 4. The secondary battery of Clause 1, wherein the plurality of second tabs are provided at positions that are spaced apart from the plurality of first tabs to face the plurality of first tabs, and the plurality of second tabs are provided in a planar circular sector which has a center, an outer arc, and an inner arc, or a planar rectangular shape.
Clause 5. The secondary battery of Clause 4, wherein a central angle of the plurality of second tabs is less than an angle of about 180 degrees.
Clause 6. The secondary battery of Clause 1, wherein the first current collector plate comprises: a first current collector plate first connection area connected to the plurality of first tabs; a first current collector plate connection area bent and extending from the first current collector plate first connection area; and a first current collector plate second connection area bent and extending from the first current collector connection area and connected to the rivet terminal.
Clause 7. The secondary battery of Clause 6, wherein the first current collector plate first connection area is provided in a planar circular sector which has a center, an outer arc, and an inner arc, and the first current collector plate second connection area has a disk shape with a center.
Clause 8. The secondary battery of Clause 1, wherein the second current collector plate comprises: a second current collector plate first connection area connected to the plurality of second tabs; a second current collector plate connection area bent and extending from the second current collector plate first connection area; and a second current collector plate second connection area bent and extending from the second current collector connection area and connected to the case.
Clause 9. The secondary battery of Clause 8, wherein the second current collector plate first connection area is provided in a planar circular sector which has a center, an outer arc, and an inner arc, and the second current collector plate second connection area has a circular ring plate shape with a center.
Clause 10. The secondary battery of Clause 1, further comprising an insulating plate interposed between the first current collector plate and the second current collector plate, wherein a partial area of the insulating plate is disposed in a gap between the second current collector plate and the electrode assembly.
Clause 11. The secondary battery of Clause 1, further comprising a conductive ring plate attached to a partial area of the case around the rivet terminal.
Clause 12. The secondary battery of Clause 1, wherein the first current collector plate comprises: a first current collector plate first connection area connected to the plurality of first tabs; a first current collector plate connection area bent and extending from the first current collector plate first connection area in the first direction; and a first current collector plate second connection area bent and extending from the first current collector plate connection area and connected to the rivet terminal, and the second current collector plate comprises: a second current collector plate first connection area connected to the plurality of second tabs; a second current collector plate connection area bent and extending from the second current collector plate first connection area in the first direction; and a second current collector plate second connection area bent and extending from the second current collector plate connection area and connected to the case.
Clause 13. The secondary battery of Clause 12, wherein the first current collector plate first connection area and the second current collector plate first connection area are disposed on the same plane, and the first current collector plate second connection area is disposed closer to the electrode assembly than the second current collector plate second connection area.
Clause 14. The secondary battery of Clause 12, wherein a partial area of the second current collector plate second connection area is disposed to overlap the first current collector plate first connection area.
Clause 15. The secondary battery of Clause 1, wherein the case comprises: a rivet plate coupled to pass through the rivet terminal; a sidewall extending integrally from the rivet plate in a second direction that is opposite to the first direction; and a finish plate configured to block an end of the sidewall.
Clause 16. The secondary battery of Clause 15, wherein the finish plate comprises a safety vent.
Clause 17. The secondary battery of Clause 15, wherein the finish plate is fixed to the sidewall by a beading part and a crimping part, which are provided on the sidewall.
Clause 18. The secondary battery of Clause 15, wherein the finish plate is fixed to the sidewall by welding.
Clause 19. The secondary battery of Clause 1, wherein the case comprises: a rivet plate coupled to pass through the rivet terminal; a sidewall welded to the rivet plate to extending in a second direction that is opposite to the first direction; and a finish plate extending integrally from the sidewall.
Clause 20. The secondary battery of Clause 19, wherein the finish plate comprises a safety vent.

The present disclosure is not limited to the foregoing embodiments, and also it will be understood by those of ordinary skill in the art that various changes may be made therein without departing from the scope of the present disclosure as defined by the following claims.

## Claims

1. A secondary battery comprising:
a case;
an electrode assembly in the case, with the electrode assembly comprising a plurality of first tabs that protrude in a first direction, and a plurality of second tabs that protrude in the first direction;
a first current collector plate in the case and electrically connected to the first tabs;
a second current collector plate configured to electrically connect the plurality of second tabs to the case; and
a rivet terminal electrically connected to the first current collector plate and passing through the case.

2. The secondary battery as claimed in claim 1, wherein the first tabs have a planar circular sector having a center, an outer arc, and an inner arc, or have a planar rectangular shape.

3. The secondary battery as claimed in claim 2, wherein a central angle of the first tabs is less than about 180 degrees.

4. The secondary battery as claimed in claim 1, 2 or 3, wherein the second tabs are spaced apart from the first tabs, and have a planar circular sector having a center, an outer arc, and an inner arc, or have a planar rectangular shape.

5. The secondary battery as claimed in claim 4, wherein an internal angle of the second tabs is less than about 180 degrees.

6. The secondary battery as claimed in any preceding claim, wherein the first current collector plate comprises:
a first current collector plate first connection area electrically connected to the first tabs;
a first current collector plate connection area bent and extending from the first current collector plate first connection area; and
a first current collector plate second connection area bent and extending from the first current collector plate connection area, and electrically connected to the rivet terminal.

7. The secondary battery as claimed in claim 6, wherein the first current collector plate first connection area has a planar circular sector having a center, an outer arc, and an inner arc, and
wherein the first current collector plate second connection area has a disk shape with a center.

8. The secondary battery as claimed in any preceding claim, wherein the second current collector plate comprises:
a second current collector plate first connection area electrically connected to the second tabs;
a second current collector plate connection area bent and extending from the second current collector plate first connection area; and
a second current collector plate second connection area bent and extending from the second current collector plate connection area, and electrically connected to the case.

9. The secondary battery as claimed in claim 8, wherein the second current collector plate first connection area has a planar circular sector having a center, an outer arc, and an inner arc, and
wherein the second current collector plate second connection area has a circular ring plate shape with a center.

10. The secondary battery as claimed in any preceding claim, further comprising an insulating plate between the first current collector plate and the second current collector plate, and having a partial area in a gap between the second current collector plate and the electrode assembly.

11. The secondary battery as claimed in any preceding claim, further comprising a conductive ring plate attached to a partial area of the case around the rivet terminal.

12. The secondary battery as claimed in any preceding claim, wherein the first current collector plate comprises:
a first current collector plate first connection area electrically connected to the plurality of first tabs;
a first current collector plate connection area bent and extending from the first current collector plate first connection area in the first direction; and
a first current collector plate second connection area bent and extending from the first current collector plate connection area, and electrically connected to the rivet terminal, and
wherein the second current collector plate comprises:
a second current collector plate first connection area electrically connected to the plurality of second tabs;
a second current collector plate connection area bent and extending from the second current collector plate first connection area in the first direction; and
a second current collector plate second connection area bent and extending from the second current collector plate connection area, and electrically connected to the case.

13. The secondary battery as claimed in claim 12, wherein at least one of:
the first current collector plate first connection area and the second current collector plate first connection area are on the same plane, and
wherein the first current collector plate second connection area is closer to the electrode assembly than the second current collector plate second connection area; and
a partial area of the second current collector plate second connection area overlaps the first current collector plate first connection area.

14. The secondary battery as claimed in any preceding claim, wherein the case comprises:
a rivet plate coupled to the rivet terminal;
a sidewall extending integrally from the rivet plate in a second direction that is opposite to the first direction; and
a finish plate configured to block an end of the sidewall,
and wherein optionally at least one of:
the finish plate comprises a safety vent;
the finish plate is fixed to the sidewall by a beading part and a crimping part provided on the sidewall.
the finish plate is fixed to the sidewall by a weld.

15. The secondary battery as claimed in any one of claim 1 to 13, wherein the case comprises:
a rivet plate coupled to the rivet terminal;
a sidewall welded to the rivet plate and extending in a second direction that is opposite to the first direction; and
a finish plate extending integrally from the sidewall,
and wherein optionally the finish plate comprises a safety vent.
